# EUROPÄISCHE PATENTANMELDUNG

(11) **EP 1 614 795 A1**
(43) Veröffentlichungstag der Anmeldung: **11.01.2006**
(21) Anmeldenummer: 05012073.2
(22) Anmeldetag: 04.06.2005
(51) Int. Cl.: D06M 10/02, D06M 13/148, D06M 13/17, D06M 13/203, D06M 13/278, D06M 13/313, B29C 59/14

(54) **Funktionalisierte Vliesstoffe, Verfahren zu deren Herstellung und deren Verwendung**

(30) Priorität: 09.07.2004 DE 102004033196
(71) Anmelder: Carl Freudenberg KG, 69469 Weinheim (DE)
(72) Erfinder: Margarit-Puri, Kristina, 69517 Gorxheimertal (DE); Severich, Birgit, 68163 Mannheim (DE); Schöpping, Gerhard, 69502 Hemsbach (DE); Rodemann, Klaus, 45289 Essen (DE)

(57) **Zusammenfassung**

Beschrieben werden funktionalisierte Vliesstoffe, die im pH-Bereich von 1 bis 13 ein negatives Zeta-Potential aufweisen, und deren Fasern eine durch Plasmabehandlung aufgebrachte Oberflächenschicht oder Oberflächenbereiche mit kovalent an die Faseroberfläche gebundenen anionischen Gruppen und/oder in anionische Gruppen überführbaren Vorläufern und/oder Polyethergruppen und/oder Polyolgruppen besitzen.

Diese Vliesstoffe lassen sich als Filter- oder Trennmaterialien einsetzen.

## Beschreibung

Die vorliegende Erfindung betrifft funktionalisierte Vliesstoffe mit oberflächlich kovalent gebundenen anionischen Gruppen, deren Herstellung und deren Verwendung als Filtermaterialien, insbesondere für die Filtration von Polymeren, wie Proteinen.

Die Funktionalisierung von Substraten mit hydrophilisierenden Materialien ist eine bereits seit langem erprobte Technik.

Aus dem Stand der Technik sind mehrere naß- und/oder photochemische Verfahren bekannt, bei denen Substrate mit ethylenisch ungesättigten Säuren oder Basen oberflächlich funktionalisiert werden. Diese Verfahren betreffen die Imprägnierung von Substraten mit polymerisierbaren Monomeren und davor oder danach eine Behandlung mit UV-, alpha-, beta- oder gamma-Strahlung, thermisch oder mit Ozon (gegebenenfalls nach vorheriger Hydrophilierung der Oberfläche durch Plasma- oder Koronabehandlung). Beispiele dafür finden sich in den US-A-3,008,920, US-A-3,070,573; WO-A-01/34,388 und US-A-6,384,100. Auf diese Weise erzeugte Oberflächenschichten sind in der Regel relativ dick, d.h. diese weisen eine Dicke im Bereich von Mikrometern auf.

Aus der EP-A-574,352 ist eine Oberflächenbehandlung von polymeren Substraten durch Pfropfung mit polymerisierbaren Monomeren, wie (Meth)acrylsäure, bekannt. Nach einer Plasmabehandlung wird die Oberfläche mit Sauerstoff kontaktiert, wodurch sich Hydroperoxidgruppen bilden; danach erfolgt die Pfropfung durch Kontakt mit dem polymerisierbaren Monomeren. Auch die auf diese Art und Weise erzeugten Oberflächenschichten sind relativ dick.

Ein ähnliches Verfahren, welches ebenfalls zu relativ dicken Oberflächenschichten führt, ist aus der KR-A-89-03,550 bekannt. Hier wird eine Faser mit Niederdruckplasma behandelt und nachträglich wird ein polymerisierbares Monomer, wie Acrylsäure, aufgetragen.

Die KR-A-91-08,303 beschreibt die Behandlung einer Faser mit einem Niederdruckplasma in Gegenwart eines gasförmigen polymerisierbaren Monomeren, wie Acrylsäure.

Die WO-A-00/69,548 schließlich beschreibt die Modifikation einer Membranoberfläche durch Behandlung mit einer Glimmentladung, der gesättigtes Alkan oder Acetylen zugesetzt ist. Als mögliche Zusätze können weitere Comonomere, wie Acrylsäure, vorhanden sein. Diese Schrift beschreibt unterschiedliche poröse Materialien als Substrate, hauptsächlich Membranen. Die funktionalisierten Membranen lassen sich zur Aufkonzentrierung von Proteinlösungen einsetzen.

Aus der EP-A-896,035 ist die Herstellung von Oberflächenschichtungen durch Gasphasen- oder Plasmapolymerisation ausgewählter Monomerer bekannt. Die beschriebene Methode wird hauptsächlich zur Hydrophilisierung von Kontaktlinsen eingesetzt.

Aus der WO-A-03/84,682 ist ein Verfahren zur Behandlung von Substraten mit atmosphärischem Plasma bekannt, dem polymerisierbare organische Säuren und/oder Basen beigefügt sind. Es werden verschiedene Substrate aus verschiedenen Materialien beschrieben. Die Plasmabehandlung führt zu funktionalisierten Substraten, die sich zum Einsatz für Filtrations- und Trennverfahren eignen. Die Funktionalisierung von Vliesstoffen und deren Einsatz als Filter- oder Trennmaterialien ist nicht offenbart.

WO-A-03/86,031 offenbart eine Vorrichtung zum Erzeugen eines atmosphärischen Plasmas für die Beschichtung von Substraten.

Ausgehend von diesem Stand der Technik werden durch die vorliegende Erfindung funktionalisierte Vliesstoffe bereitgestellt, die sich durch hervorragende Trennwirkung bei der Filtration von polymeren Verbindungen auszeichnen, die nur geringe Mengen an funktionalisierendem Material aufweisen und die in einfacher und umweltschonender Weise hergestellt werden können. Die erfindungsgemäßen Vliesstoffe zeigen bei deutlich geringeren Anteilen an funktionalsierendem Material im Vergleich zu herkömmlichen, nasschemisch hergestellten Substraten vergleichbare oder sogar verbesserte Eigenschaften.

Eine weitere Aufgabe der vorliegenden Erfindung besteht in der Bereitstellung von Vliesstoffen, die sich als Filtermaterialien eignen und die eine hohe und dauerhafte fixierte anionische Oberflächenladung aufweisen.

Eine weitere Aufgabe der vorliegenden Erfindung besteht in der Bereitstellung von Filtermaterialien, die sich hervorragend bei der Proteinfiltration einsetzen lassen und die eine Alternative zu herkömmlich eingesetzten Membranfiltern darstellen.

Eine weitere Aufgabe der vorliegenden Erfindung besteht in der Bereitstellung eines lösungsmittelfreien Verfahrens zur Herstellung von funktionalisierten Vliesstoffen.

Die vorliegende Erfindung betrifft funktionalisierte Vliesstoffe, die im pH-Bereich von 1 bis 13 ein negatives Zeta-Potential aufweisen, und deren Fasern eine durch Plasmabehandlung aufgebrachte Oberflächenschicht oder Oberflächenbereiche mit kovalent an die Faseroberfläche gebundenen Gruppen besitzen, die ausgewählt werden aus anionischen Gruppen und/oder in anionische Gruppen überführbaren Vorläufern und/oder Polyethergruppen und/oder Polyolgruppen.

Die Fasern des erfindungsgemäßen Vliesstoffes enthalten vorzugsweise oberflächlich kovalent gebundene Säuren, deren Vorläufer, Polyole oder Polyether.

Die Oberflächenschicht der Fasern oder einzelne Bereiche auf der Faseroberfläche weisen typischerweise Schichtdicken von nicht mehr als 100 nm auf, vorzugsweise Schichtdicken von 5 bis 100 nm.

Die Oberflächenschicht oder die Oberflächenbereiche der erfindungsgemäß funktionalisierten Vliesstoffe werden durch Plasmabehandlung aufgebracht, wobei dem Plasma ein oder mehrere mindestens einen organischen Rest und eine anionische Gruppe und/oder deren Vorläufer enthaltende Verbindungen und/oder Polyether und/oder Polyole, vorzugsweise mindestens einen organischen Rest und mindestens eine Säuregruppe und/oder deren Vorläufer aufweisende Verbindungen, insbesondere ethylenisch ungesättigte Säuren und/oder deren Vorläufer zugesetzt werden; anstelle der oder zusammen mit den Säuren können auch deren Salze eingesetzt werden.

Vorläufer von Säuren sind Verbindungen mit solchen Gruppen, die nach dem Aufbringen der Oberflächenschichten oder -bereiche durch Nachbehandlung in Säuren übergeführt werden können. Beispiele dafür sind Anhydride, Ester, Amide, Sulfoxide oder Sulfone. Es können auch Mono-, Di-, Tri- oder Polyester von gegebenenfalls ein oder mehrere Ethergruppen enthalten Polyolen mit Carbonsäuren, eingesetzt werden.

Als Polyole lassen sich Verbindungen mit mehreren Hydroxylgruppen einsetzen. Diese können niedermolekulare aliphatische oder cycloaliphatische Verbindungen sein, wie Ethylenglykol, Propylenglykol, Butylenglykol, Trimethylolpropan, Pentaerithrit oder Sorbit, oder es kann sich um höhermolekulare aliphatische oder cycloaliphatische Verbindungen handeln, wie um Polyethylenglykol, Polypropylenglykol oder Polybutylenglykol mit unterschiedlichen Polymerisationsgraden.

Als Polyether lassen sich Verbindungen mit mindestens zwei Ethergruppen einsetzen. Diese können niedermolekulare aliphatische oder cycloaliphatische Verbindungen sein, wie Ethylenglykol-, Propylenglykol- oder Butylenglykolalkylether, Trimethylolpropanalkylether, Pentaerithritalkylether oder Sorbitalkylether, oder es kann sich um höhermolekulare Verbindungen handeln, wie um Polyethylenglykol-, Polypropylenglykol- oder Polybutylenglykolalkylether mit unterschiedlichen Polymerisationsgraden.

Weiterhin können auch Polyether- und Polyolgruppen aufweisende Verbindungen eingesetzt werden.

Die Funktionalisierung von Substraten mit vorzugsweise ethylenisch ungesättigten Säuren durch Plasmabehandlung ist an sich bekannt und in der WO-A-03/84,682 oder der WO-A-03/86,031 beschrieben.

Die zur Herstellung der erfindungsgemäßen Filtermaterialien erforderlichen Vliesstoffe können auf beliebige und an sich bekannte Verfahrensweisen auf nassem, trockenem oder sonstigem Wege hergestellt werden.

So können beispielsweise Spinnvliesverfahren, Kardierverfahren, Schmelzblasverfahren, Nassvlies-Verfahren, elektrostatisches Spinnen oder aerodynamische Vliesherstellungsverfahren zum Einsatz kommen.

Bei den erfindungsgemäß funktionalisierten Vliesstoffen kann es sich also um Spinnvliesstoffe, Meltblown-Vliesstoffe, Stapelfaservliesstoffe, Nassvliesstoffe oder Hybridmedien dieser Vliesstoffe, wie Meltblown / Nassvliesstoffe oder Meltblown / Stapelfaservliesstoffe handeln.

Die erfindungsgemäßen Filtermaterialien enthalten Fasern aus fadenbildenden Polymeren und sind vorzugsweise verfestigt.

Die erfindungsgemäßen Filtermaterialien können aus beliebigen Fasertypen der verschiedensten Durchmesserbereiche bestehen. Typische Faserdurchmesser bewegen sich im Bereich von 0,01 bis 200 µm, vorzugsweise 0,05 bis 50 µm.

Neben Endlosfasern können diese Filtermaterialien aus Stapelfasern bestehen oder diese enthalten.

Neben Homofilfasern können auch Heterofilfasern oder Gemische verschiedenster Fasertypen eingesetzt werden.

Typischerweise weisen die erfindungsgemäßen funktionalisierten Vliesstoffe Flächengewichte von 0,05 bis 500 g/m² auf.

Besonders bevorzugt kommen funktionalisierte Vliesstoffe mit geringen Flächengewichten von 1 bis 150 g/m² zum Einsatz.

Als fadenbildende Polymere können in Abhängigkeit vom ins Auge gefassten Verwendungszweck unterschiedlichste Polymere zum Einsatz kommen.

Beispiele für Polymere sind Polyester, insbesondere Polyethylenterephthalat, Polybutylenterephthalat oder Copolymere enthaltend Polyethylenterephthalateinheiten oder Polybutylenterephthalateinheiten, Polyamide, insbesondere von aliphatischen Diaminen und Dicarbonsäuren, von alphatischen Aminocarbonsäuren oder von aliphatischen Lactamen abgeleitete Polyamide, oder Aramide, also von aromatischen Diaminen und Dicarbonsäure abgeleitete Polyamide, Polyvinylalkohol, Viskose, Cellulose, Polyolefine, wie Polyethylen oder Polypropylen, Polysulfone, wie Polyethersulfone oder Polyphenylensulfon, Polyarylensulfide, wie Polyphenylensulfid, Polycarbonat oder Mischungen von zweien oder mehreren dieser Polymeren.

Die erfindungsgemäßen funktionalisierten Vliesstoffe können in an sich bekannter Weise verfestigt sein, beispielsweise durch mechanisches oder hydromechanisches Nadeln, durch Aufschmelzen von im Vliesstoff vorhandenen Bindefasern, durch thermisch-mechanisches Verfestigen oder durch Applikation von Bindemitteln.

Es wurde gefunden, dass die erfindungsgemäßen funktionalisierten Vliesstoffe durch eine Plasmabehandlung hergestellt werden können. Dadurch werden auf den Fasern des Vliesstoffes dünne Schichten oder Bereiche aus oberflächlich kovalent gebundenen Materialien ausgebildet, die Gruppen aufweisen, welche die Ausbildung eines negativen Zetapotentials fördern. Typischerweise handelt es sich dabei um Gruppen, die kovalent gebundene anionische Reste aufweisen oder ausbilden können oder die polarisierbaren Hydroxy- oder Ethergruppen aufweisen. Beispiele für anionische Reste sind Säuregruppen, deren Salze oder Vorläufer von Säuren, wobei aus den Vorläufern in nachgeschalteten Schritten, beispielsweise durch Oxidation, Säuregruppen erzeugt werden. Die oberflächlichen anionischen Gruppen oder die polarisierbaren Hydroxy- oder Ethergruppen bewirken eine hohe Oberflächenladung und haben die Ausbildung einer ausgeprägten Doppelschicht zur Folge.

Beispiele für anionische Reste sind Reste von Sulfonsäuren, insbesondere von Arylsulfonsäuren, von Carbonsäuren, Aminosäuren, Sulfinsäuren, Xanthogensäuren, Persäuren, Thiolsäuren, Dithiocarbamidsäuren und Dithiocarbonsäuren einschließlich der von diesen Säuren abgeleiteten Salze.

Die erfindungsgemäßen funktionalisierten Vliesstoffe sind durch ein negatives Zeta-Potential über einen weiten pH-Bereich, typischerweise zwischen 1 und 13, vorzugsweise zwischen 2 und 11 charakterisiert. Die Messung des Zeta-Potentials erfolgt für die Zwecke dieser Erfindung mit einem kommerziell erhältlichen Elektro-Kinetik-Analyzer (EKA) der Firma PAAR (Graz, Österreich).

Bevorzugt sind funktionalisierte Vliesstoffe, die im pH-Bereich von 2 bis 11 ein Zeta-Potential von -1 bis -100 mV, insbesondere von -5 bis - 80 mV aufweisen.

Weitere bevorzugte funktionalisierte Vliesstoffe weisen im pH-Bereich von 5 bis 11 ein Plateau des negativen Zeta-Potentials auf, insbesondere zwischen -10 bis -60 mV bei Carboxylgruppen aufweisenden Fasern und zwischen -60 bis -100 mV bei Sulfonsäuregruppen aufweisenden Fasern.

Die erfindungsgemäß erzeugten Oberflächenschichten oder -bereiche sind sehr stabil und werden durch Behandlung der funktionalisierten Vliesstoffe in stark alkalischen Medien nicht zerstört.

So lassen sich mit Säuregruppen oder deren Vorläufern funktionalisierte Vliesstoffe bei 40°C für 30 Minuten in 0,5 M Natronlauge waschen und anschließend mit Wasser spülen. Dadurch werden aus den oberflächlich kovalent gebundenen Säuregruppen die entsprechenden Natriumsalze gebildet, die für die Ausbildung der Doppelschicht förderlich sind.

Die Stabilität der erzeugten Plasmapolymerschichten kann durch besondere Maßnahmen noch erhöht werden. So lassen sich dem Plasma vernetzend wirkende Verbindungen zusetzen oder vor der eigentlichen Funktionalisierung der Vliesstoffe erfolgt eine Aktivierung des Substrats durch Plasmabehandlung ohne Zusatz von funktionalisierenden Substanzen oder es wird eine mehrfache Funktionalisierung durchgeführt, wodurch sich Multischichten ausbilden.

Als Säuren für die Modifizierung der Faseroberflächen können sämtliche Verbindungen mit mindestens einem organischen Rest, welche mindestens eine, vorzugsweise zwei Säuregruppen oder insbesondere eine Säuregruppe enthalten, eingesetzt werden.

Neben Carbonsäuren können Sulfonsäuren oder Phosphorsäuren verwendet werden, sowie deren Salze, vorzugsweise deren Alkalisalze, deren Anhydride oder weitere in Säuren überführbare Vorläufer, beispielsweise deren Ester oder Amide. Neben Säuren mit gesättigten organischen Resten können bevorzugt Säuren mit ethylenisch ungesättigten Resten eingesetzt werden. Beispiele für organische Reste sind Alkyl-, Alkenyl-, Alkinyl-, Cycloalkyl-, Cycloalkenyl-, Cycloalkinyl- Aryl-, Heteroaryl- und Aralkylreste.

Bevorzugte Säuren mit ethylenisch ungesättigten Resten sind ethylenisch ungesättigte Carbonsäuren, ethylenisch ungesättigte Sulfonsäuren, ethylenisch ungesättigte Phosphonsäuren oder Phosphorsäureester mit ethylenisch ungesättigten Alkoholen.

Beispiele für ethylenisch ungesättigte Carbonsäuren sind Acrylsäure, Methacrylsäure, Fumarsäure, Maleinsäure, Citraconsäure, Zimtsäure oder Itaconsäure.

Beispiele für ethylenisch ungesättigte Phosphonsäuren sind Vinylphosphonsäure und Vinylphenylphosphonsäure.

Beispiele für eine ethylenisch ungesättigte Sulfonsäuren sind Vinylsulfonsäure und Vinylphenylsulfonsäure.

Anstelle oder in Kombination mit ethylenisch ungesättigten Säuren oder deren Derivaten können zunächst Vorläufer von Säuren, insbesondere ethylenisch ungesättigte Vorläufer von Säuren auf der Faseroberfläche abgeschieden werden, die in einem nachfolgenden Schritt in die entsprechenden Säuren übergeführt werden.

Beispiele dafür sind Sulfone oder Sulfoxide, vorzugsweise ethylenisch ungesättigte Sulfone oder Sulfoxide, sowie Carbonsäureester, Carbonsäureamide, Phosphorsäureester, Phosphorsäureamide, Sulfonsäureester oder Sulfonamide.

Bevorzugte ethylenisch ungesättigte Sulfone oder Sulfoxide sind Vinylsulfon, Divinylsulfon, Vinylsulfoxid und Divinylsulfoxid.

Bevorzugte Carbonsäureester sind Polyalkylenglykolmono- oder -diacrylat oder Polyalkylenglykolmono- oder -dimethacrylat.

Aus diesen Verbindungen können nach der kovalenten Anbindung an die Faseroberfläche durch Oxidation oberflächlich gebundene Sulfonsäuregruppen freigesetzt werden.

Die Ausbildung von Doppelschichten in Verbindung mit der Porenstruktur des Vliesstoffes hat eine äußerst effiziente Filtrationswirkung, insbesondere von ionische Gruppen aufweisenden Substraten, wie Proteinen, Aminosäuren oder sonstige mit ionischen Gruppen funktionalisierte Polymere, zur Folge.

Bei der erfindungsgemäßen Funktionalisierung der Fasern werden im Vergleich zu herkömmlichen nasschemischen Verfahren nur geringe Mengen an anionischen Gruppen bzw. deren Vorläufer auf der Faseroberfläche abgeschieden. Dieses äußert sich in einer geringen Dicke der auf den Fasern ausgebildeten Schichten oder Bereichen von anionischen Gruppen. Die Dicken dieser Schichten oder Bereiche bewegen sich dabei üblicherweise im oben angegebenen Bereich und lassen sich z.B. mittels Röntgenphotoelektronenspektroskopie bestimmen. Dabei lassen sich Schichtdicken von bis zu 100 nm bestimmen, was der theoretischen Informationstiefe dieser oberflächenanalytischen Methode entspricht. Größere Schichtdicken lassen sich mittels AFM, Ellipsometrie oder REM bestimmen.

Dabei versteht es sich, dass die erfindungsgemäßen funktionalisierten Vliesstoffe auch geringe Anteile, beispielsweise bis zu 10 Vol. %, aufweisen können, wie im Innern der plasmabehandelten, funktionalisierten Vliesstoffe, in denen Fasern ohne Schichten oder Bereiche von anionischen Gruppen auftreten.

Vorzugsweise weisen jedoch alle Fasern der erfindungsgemäß funktionalisierten Vliesstoffe Oberflächenschichten oder -bereiche mit anionischen Gruppen oder mit polarisierbaren Ether- und/oder Hydroxygruppen auf.

Das erfindungsgemäße Verfahren zeichnet sich durch einen geringen Material- und Energieverbrauch aus sowie als lösungsmittelfreies Verfahren durch eine Schonung der Umwelt.

Die Erfindung betrifft auch Verfahren zur Herstellung des oben definierten funktionalisierten Vliesstoffes umfassend die Schritte:
a) Herstellung eines Vliesstoffes durch eine Vlieststoffbildungstechnik in an sich bekannter Weise,
b) Bereitstellen eines Raumbereiches, in dem eine Plasmaentladung brennt und in dem mindestens eine einen organischen Rest enthaltende Säure und/oder deren Salz und/oder deren Vorläufer und/oder einen Polyether und/oder ein Polyol, vorzugsweise mindestens eine ethylenisch ungesättigte Säure und/oder deren Salz, Anhydrid und/oder Vorläufer, in feinverteilter Form vorliegt, und
c) Transport des Vliesstoffes durch den Raumbereich, in dem die Plasmaentladung brennt, so dass der Vliesstoff der Plasmaentladung ausgesetzt wird.

In einer alternativen Ausführungsform betrifft das erfindungsgemäße Verfahren die Herstellung des oben definierten funktionalisierten Vliesstoffes umfassend die Schritte:
a) Herstellung eines Vliesstoffes durch eine Vliesstoffbildungstechnik in an sich bekannter Weise,
b) Bereitstellen eines Raumbereiches, in dem eine Plasmaentladung brennt und in dem mindestens ein Vorläufer einer einen organischen Rest enthaltenden Säure gegebenenfalls in Kombination mit mindestens einer einen organischen Rest enthaltenden Säure, deren Salz und/oder deren Vorläufer und/oder einem Polyether und/oder einem Polyol in feinverteilter Form vorliegt,
c) Transport des Vliesstoffes durch den Raumbereich, in dem die Plasmaentladung brennt, so dass der Vliesstoff der Plasmaentladung ausgesetzt wird, und
d) Nachbehandlung des funktionalisierten Vliesstoffes mit einem Mittel, um aus dem Vorläufer der Säure die Säure oder deren Salz zu erzeugen.

Die Plasmabehandlung erfolgt durch kontinuierliches Leiten des Vliesstoffes durch die Plasmaentladung. Typische Bahngeschwindigkeiten betragen 0,5 bis 400 m/min.

Als Plasma wird erfindungsgemäß ein bei Atmosphärendruck brennendes Plasma eingesetzt, wie dieses in WO-A-03/84,682 oder WO-A-03/86,031 beschrieben ist. Unter den Bedingungen der Plasmabehandlung wird die einen organischen Rest und mindestens eine anionische Gruppe enthaltende Verbindung unter Erhalt der Struktur aktiviert und kann auf diese Weise beim Zusammentreffen mit der Faseroberfläche an diese kovalent binden.

Die Behandlung wird in oxidierender oder vorzugsweise in nicht-oxidierender Atmosphäre mit z.B. einem Edelgas, wie Helium oder Argon als Inertgas zusammen mit der einen organischen Rest und mindestens eine anionische Gruppe enthaltenden Verbindung und/oder deren Vorläufer oder Derivat, bei atmosphärischem Druck durchgeführt. Der Zusatz von weiteren reaktiven Gasen oder Additiven im Plasma kann entfallen. Typische Arbeitsdrucke im Plasma betragen 0,7 bis 1,3 bar, vorzugsweise 0,9 bis 1,1 bar.

Die Nachbehandlung des mit dem Vorläufer einer Säure funktionalisierten Vliesstoffes erfolgt typischerweise durch Oxidation der durch die Plasmabehandlung modifizierten Faseroberfläche. Dieses kann durch den Einsatz von Oxidationsmitteln, beispielsweise in der Gasphase oder nasschemisch erfolgen oder durch Nachbehandlung mit einem oxidierenden Plasma.

Bevorzugt werden Varianten der oben definierten Verfahren, bei denen dem Plasma Vernetzer mit mindestens zwei reaktiven Gruppen, vorzugsweise ethylenisch ungesättigten Gruppen, besonders bevorzugt mindestens zwei Vinylgruppen zugesetzt werden.

Weitere bevorzugte Varianten der oben definierten Verfahren umfassen vor der eigentlichen Plasmabehandlung eine Aktivierung des Substrats durch Plasmabehandlung in Inertgasatmosphäre oder mit Luft.

Weitere bevorzugte Varianten der oben definierten Verfahren umfassen mehrfache Plasmabehandlungen, wodurch sich Multischichten ausbilden.

Die erfindungsgemäßen funktionalisierten Vliesstoffe werden vorzugsweise in Filter- oder Trennverfahren in gasförmigen oder insbesondere in flüssigen Medien eingesetzt. Dabei kommen die erfindungsgemäßen funktionalisierten Vliesstoffe als Filtermedien zum Einsatz oder sie werden kombiniert mit Membranen als Vorfilter eingesetzt.

Die erfindungsgemäßen funktionalisierten Vliesstoffe können als Medien oder Vorfilter in der Wasser- oder Lebensmittelfiltration oder zur Filtration von Pharmazeutika eingesetzt werden. Sie können aber auch als Medien oder Vorfilter zur Kraftstofffiltration, zur Ölfiltration oder zur Schmiermittelfiltration eingesetzt werden oder als Filter- oder Trennmedien für den Atemschutz, in Klimaanlagen, für Verbrennungs-, Elektromotoren oder industrielle Anlagen oder in Entstaubungsanlagen.

Bevorzugt werden die erfindungsgemäßen funktionalisierten Vliesstoffe zur Filtration oder Trennung von Lösungsbestandteilen, insbesondere von ionisierten oder ionisierbaren chemischen Verbindungen, ganz besonders bevorzugt von ionisierten oder ionisierbaren Polymeren, wie Proteinen, eingesetzt.

Die Erfindung betrifft die ebenfalls Verwendung der funktionalisierten Vliesstoffe als Filter- oder Trennmaterialien.

Die nachfolgenden Beispiele beschreiben die Erfindung ohne diese zu begrenzen.

### Beispiel 1

Ein Vliesstoff aus Fasern aus Polypropylen ("PP") und Polyethylen ("PE") wurde unter Einwirkung eines Atmosphärendruck-Plasmas funktionalisiert. Als Inertgas wurde Helium und als reaktive Substanz Acrylsäure eingesetzt.

Während der Plasmabehandlung wurde unter Sauerstoffausschluss gearbeitet. Die Vliesstoffproben zeigten über den gesamten pH-Bereich ein negatives Zetapotential. Der Gehalt an Säuregruppen an der Oberfläche wurde durch Einstellung eines pH-Bereichs von 11 und durch Rücktitration mit 0,01 N Salzsäure ermittelt. Es wurde ein Gehalt an Carboxylgruppen von 0,12 mmol/g Vliesstoff ermittelt.

### Beispiel 2

Ein Vliesstoff aus PP / PE Fasern wurde wie in Beispiel 1 beschrieben funktionalisiert mit dem Unterschied, dass anstelle von Acrylsäure Divinylsulfoxid eingesetzt wurde. Nach der Plasmabehandlung mit Dinvinylsulfoxid wurde der modifizierte Vliesstoff durch Behandlung mit einem sauerstoffhaltigen Plasma (Gemisch He/O₂) oxidiert. Die Vliesstoffproben zeigten über den gesamten pH-Bereich ein negatives Zetapotential. Es wurde ein Gehalt an Säuregruppen von 0,09 mmol/g Vliesstoff ermittelt.

### Beispiel 3

Ein Vliesstoff aus PP / PE Fasern wurde wie in Beispiel 2 beschrieben funktionalisiert und anschließend mit sauerstoffhaltigem Plasma oxidiert mit dem Unterschied, dass anstelle von Divinylsulfoxid Phenylvinylsulfoxid eingesetzt wurde. Die Vliesstoffproben zeigten über den gesamten pH-Bereich ein negatives Zetapotential.

### Beispiel 4

Ein Vliesstoff aus Fasern aus PP / PE wurde unter Einwirkung eines Atmosphärendruck-Plasmas funktionalisiert. Als Inertgas wurde Helium und als reaktive Substanz wurde in einem ersten Schritt Acrylsäure und in einem zweiten Schritt Phenylvinylsulfoxid eingesetzt. Während der beiden Schritte der Plasmabehandlung wurde unter Sauerstoffausschluss gearbeitet.

Anschließend wurde das Material in einem sauerstoffhaltigen Plasma oxidiert. Die Vliesstoffproben zeigten über den gesamten pH-Bereich ein negatives Zetapotential.

### Beispiel 5

Ein Vliesstoff aus PP / PE Fasern wurde wie in Beispiel 4 beschrieben funktionalisiert mit dem Unterschied, dass im zweiten Schritt anstelle von Phenylvinylsulfoxid Divinylsulfoxid eingesetzt wurde. Die Vliesstoffproben zeigten über den gesamten pH-Bereich ein negatives Zetapotential.

### Beispiel 6

Ein Vliesstoff aus PP / PE Fasern wurde wie in Beispiel 4 beschrieben funktionalisiert mit dem Unterschied, dass vor der Durchführung des zweiten Schritts die Acrylsäureschicht mit einem sauerstoffhaltigen Plasma oxidiert wurde. Danach wurde im He-Plasma Divinylsulfoxid abgeschieden und diese Schicht anschließend in einem sauerstoffhaltigen Plasma oxidiert. Die Vliesstoffproben zeigten über den gesamten pH-Bereich ein negatives Zetapotential. Es wurde ein Gehalt an Säuregruppen von 0,016 mmol/g Vliesstoff ermittelt.

### Beispiel 7

Ein Vliesstoff aus PP / PE Fasern wurde wie in Beispiel 6 beschrieben funktionalisiert mit dem Unterschied, dass nach der Oxidation der Acrylsäureschicht im He-Plasma anstelle von Divinylsulfoxid Phenylvinylsulfoxid abgeschieden wurde. Die Vliesstoffproben zeigten über den gesamten pH-Bereich ein negatives Zetapotential.

### Beispiel 8

Ein Vliesstoff aus PP / PE Fasern wurde wie in Beispiel 1 beschrieben funktionalisiert mit dem Unterschied, dass anstelle von Acrylsäure Polyethylenglykolmethacrylat eingesetzt wurde. Die Vliesstoffproben zeigten über den gesamten pH-Bereich ein negatives Zetapotential.

### Charakterisierung der funktionalisierten Vliesstoffe

Verschiedene Vliesstoffe wurden durch XPS-Spektroskopie und durch Elementaranalyse charakterisiert. Die Messungen erfolgten mit einem Gerät Kratos Analytical Axis Ultra im Modus "Monochromated Al Kα X-rays. Es wurden folgende Spektren aufgenommen: O 1s, N 1s, C 1s, S 2p und Si 2p. In der nachfolgenden Tabelle 1 sind die Ergebnisse der XPS - C (1s) Spektren mit dem Anteil an C (1s) je funktioneller Gruppe aufgeführt.

**Tabelle 1**

| Vliestyp | C-C (%) | C-O (%) | C=O (%) | COOC (%) | COOH (%) |
|---|---|---|---|---|---|
| PP/PE unbehandelt | 93,9 | 3,4 | 0,7 | 2,0 | 0 |
| Beispiel 1 | 69,0 | 5,7 | 2,1 | 3,1 | 20,1 |
| Beispiel 1, in NaOH gewaschen | 85,7 | 5,5 | 1,0 | 7,8 | 0 |
| Beispiel 1, in kochendem Wasser gewaschen | 82,2 | 13,1 | 1,4 | 1,4 | 1,9 |

In der nachfolgenden Tabelle 2 sind die Ergebnisse der XPS-Elementaranalyse unterschiedlicher Vliesstoffe dargestellt.

**Tabelle 2**

| Vliestyp | Na (%) | O (%) | C (%) | N (%) | S(%) | Si (%) |
|---|---|---|---|---|---|---|
| PP/PE unbehandelt | 0 | 7,3 | 92,7 | n.b. | n.b. | n.b. |
| Beispiel 1 | 0 | 30,1 | 69,8 | n.b. | n.b. | n.b. |
| Beispiel 1, in NaOH gewaschen | 5,0 | 17,4 | 77,6 | n.b. | n.b. | n.b. |
| Beispiel 1, in kochendem Wasser gewaschen | 0 | 10,4 | 89,6 | n.b. | n.b. | n.b. |
| Beispiel 2 | n.b. | 21,0 | 73,1 | 1,3 | 2,9 | 1,8 |
| Beispiel 2, in NaOH gewaschen | n.b. | 13,5 | 82,5 | 0,8 | 2,8 | 0,4 |
| Beispiel 6 | n.b. | 27,6 | 64,4 | 1,3 | 3,4 | 3,4 |
| Beispiel 6, in NaOH gewaschen | n.b. | 12,0 | 85,3 | 0,3 | 0,9 | 1,5 |
| Beispiel 3 | n.b. | 26,3 | 70,6 | n.b. | 3,1 | n.b. |
| Beispiel 7 | n.b. | 30,3 | 59,1 | 2,6 | 4,0 | 3,7 |
| Beispiel 7, in NaOH gewaschen | n.b. | 11,7 | 85,9 | 0,3 | 1,2 | 1,0 |

| | | | | | | |
|---|---|---|---|---|---|---|
| n.b. = nicht bestimmt | | | | | | |

In der nachfolgenden Tabelle 3 sind die Ergebnisse der Analyse der XPS - S (2s) Spektren mit dem Anteil an S (2p) je funktioneller Gruppe dargestellt, nachdem die Proben in 0,5 M NaOH bei 40°C für 30 min gewaschen wurden.

**Tabelle 3**

| Vliestyp | C-C-S (%) | C-S=O (%) | O=S=O (%) | O=S(O)=O (%) | O=S(=O)=O (%) | Sulfonat (nach Waschen) (%) | Sulfonat (vor Waschen) (%) |
|---|---|---|---|---|---|---|---|
| Beispiel 2 | 70,0 | 11,2 | 3,1 | 15,8 | n.b. | 15,8 | 67 |
| Beispiel 6 | 33,3 | 11,4 | n.b. | 25,1 | 30,3 | 55,4 | 66 |
| Beispiel 5 | 45,9 | 12,7 | n.b. | 24,8 | 16,6 | 41,4 | 83 |
| Beispiel 7 | 31,5 | 38,3 | 7,0 | 23,2 | n.b. | 23,2 | 81 |
| Beispiel 4 | 23,6 | 19,8 | n.b. | 31,8 | 24,8 | 56,6 | 77 |

| | | | | | | | |
|---|---|---|---|---|---|---|---|
| n.b. = nicht bestimmt | | | | | | | |

In den Abbildungen sind Zeta-Potentiale der in den Beispielen 1, 5, 6 und 8 beschriebenen funktionalisierten Vliesstoffe bei unterschiedlichen pH-Werten dargestellt.

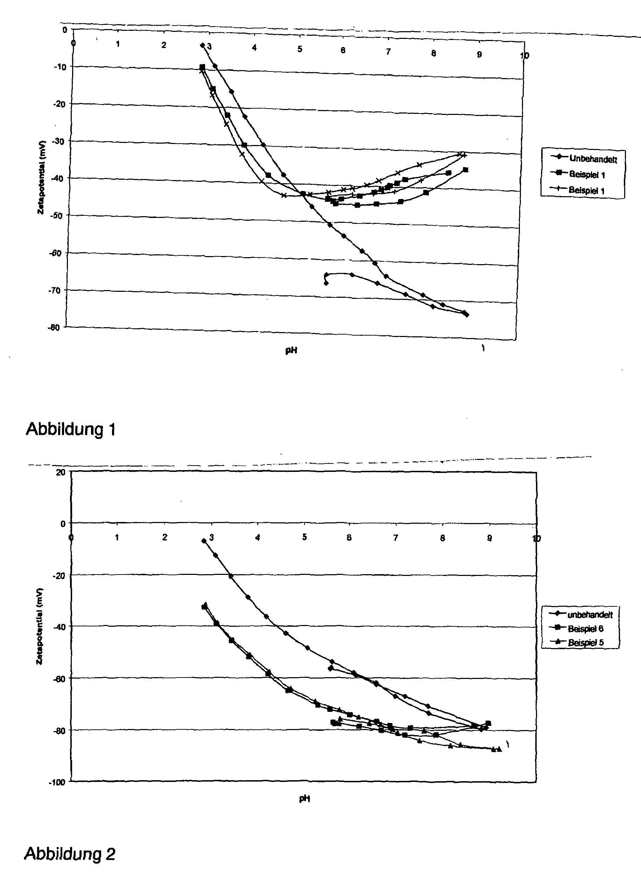

In Abbildung 1 werden Zeta-Potentiale des in Beispiel 1 beschriebenen funktionalisierten Vliesstoffs sowie der unbehandelten Vorlage dargestellt. Man erkennt, daß die Funktionalisierung bei pH-Werten zwischen 3 und 5 zu einem gegenüber der Vorlage stärker negativen Zeta-Potential führt und daß sjch bei dem funktionalisierten Vliesstoff im pH-Bereich von 5 bis 9 ein Plateau des negativen Zeta-Potentials ausbildet, während die unbehandelte Vorlage in diesem pH-Bereich ein stärker negatives Zeta-Potential zeigt. Das Plateau des Zetapotentials belegt die erfolgreiche Funktionalisierung der Oberfläche des Vliesstoffes. Durch das gleichbleibende Zetapotential über einen weiten pH-Bereich kann durch pH-Verschiebungen die Zielkomponente bei der Anwendung in Abhängigkeit von deren isoelektrischem Punkt kontrolliert adsorbiert oder desorbiert werden.

In Abbildung 2 werden Zeta-Potentiale der in Beispielen 5 und 6 beschriebenen funktionalisierten Vliesstoffe sowie der unbehandelten Vorlage dargestellt. Man erkennt, daß die Funktionalisierung über den gesamten pH-Bereich zu einer Absenkung des Zeta-Potentials führt.

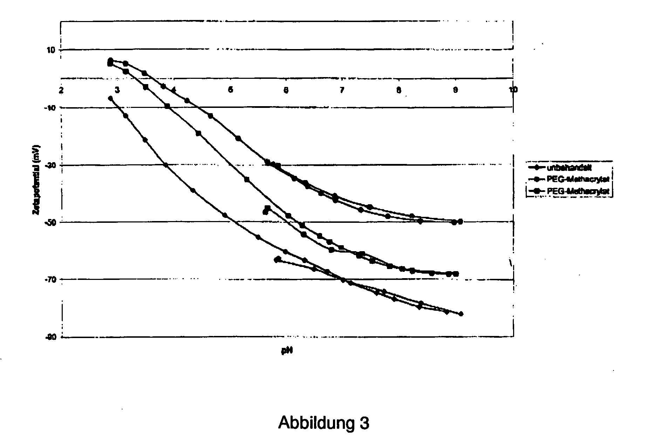

In Abbildung 3 werden Zeta-Potentiale des in Beispiel 8 beschriebenen durch einmalige und durch zweimalige Plasmabehandlung funktionalisierten Vliesstoffes sowie der unbehandelten Vorlage dargestellt. Man erkennt, daß die Funktionalisierung über den gesamten pH-Bereich zu einer Absenkung des Zeta-Potentials führt. Der Effekt ist bei dem zweifach plasmabehandelten Vliesstoff stärker ausgebildet als bei dem einfach plasmabehandelten Vliesstoff.

## Patentansprüche

1. Funktionalisierte Vliesstoffe, die im pH-Bereich von 1 bis 13 ein negatives Zeta-Potential aufweisen, und deren Fasern eine durch Plasmabehandlung aufgebrachte Oberflächenschicht oder Oberflächenbereiche mit kovalent an die Faseroberfläche gebundenen Gruppen besitzen, die ausgewählt werden aus anionischen Gruppen und/oder in anionische Gruppen überführbaren Vorläufern und/oder Polyethergruppen und/oder Polyolgruppen.

2. Funktionalisierte Vliesstoffe nach Anspruch 1, **dadurch gekennzeichnet, dass** deren Fasern eine durch Plasmabehandlung aufgebrachte Oberflächenschicht oder Oberflächenbereiche mit kovalent an die Faseroberfläche gebundenen anionischen Gruppen und/oder in anionische Gruppen überführbaren Vorläufern besitzen.

3. Funktionalisierte Vliesstoffe nach Anspruch 1, **dadurch gekennzeichnet, dass** die Dicke der Oberflächenschicht oder der Oberflächenbereiche nicht mehr als 100 nm, vorzugsweise 5 bis 100 nm beträgt.

4. Funktionalisierte Vliesstoffe nach Anspruch 1, **dadurch gekennzeichnet, . dass** die Oberflächenschicht oder die Oberflächenbereiche kovalent an die Faseroberfläche gebundene Säuren und/oder deren Salze aufweisen.

5. Funktionalisierte Vliesstoffe nach Anspruch 1, **dadurch gekennzeichnet, dass** diese ausgewählt werden aus der Gruppe bestehend aus Spinnvliesstoffen, Meltblown-Vliesstoffen, Stapelfaservliesstoffen, Nassvliesstoffen oder Hybridmedien dieser Vliesstoffe.

6. Funktionalisierte Vliesstoffe nach Anspruch 1, **dadurch gekennzeichnet, dass** diese Fasern enthalten, die ausgewählt werden aus der Gruppe bestehend aus Polyamidfasern, Polyesterfasern, Aramidfasern, Polyvinylalkoholfasern, Viskosefasern, Cellulosefasern, Polyolefinfasern, insbesondere Polyethylenfasern oder Polypropylenfasern, Polysulfonfasern, insbesondere Polyethersulfonfasern oder Polyphenylensulfonfasern, Polyarylensulfidfasern, insbesondere Polyphenylensulfidfasern, Polycarbonatfasern oder Gemischen von zweien oder mehreren davon.

7. Funktionalisierte Vliesstoffe nach Anspruch 1, **dadurch gekennzeichnet, dass** diese im pH-Bereich von 2 bis 11 ein Zeta-Potential von -1 bis -100 mV, insbesondere von -5 bis - 80 mV aufweisen.

8. Funktionalisierte Vliesstoffe nach Anspruch 7, **dadurch gekennzeichnet, dass** diese im pH-Bereich von 5 bis 11 ein Plateau des negativen Zeta-Potentials aufweisen, insbesondere zwischen -10 bis -60 mV bei Vliesstoffen mit Carboxylgruppen aufweisenden Fasern und zwischen -60 bis - 100 mV bei Vliesstoffen mit Sulfonsäuregruppen aufweisenden Fasern.

9. Funktionalisierte Vliesstoffe nach Anspruch 1, **dadurch gekennzeichnet, dass** diese von Carbonsäuren, Sulfonsäuren und/oder Phosphorsäuren, deren Salzen oder Anhydriden enthaltenden Verbindungen abgeleitete Säuregruppen kovalent auf der Faseroberfläche gebunden enthalten.

10. Funktionalisierte Vliesstoffe nach Anspruch 9, **dadurch gekennzeichnet, dass** die Carbonsäuren, Sulfonsäuren und/oder Phosphorsäuren mindestens einen ethylenisch ungesättigten Rest aufweisen und insbesondere Carbonsäuren sind, die ausgewählt werden aus der Gruppe bestehend aus Acrylsäure, Methacrylsäure, Fumarsäure, Maleinsäure, Citraconsäure, Zimtsäure, Itaconsäure oder deren Kombinationen.

11. Funktionalisierte Vliesstoffe nach Anspruch 9, **dadurch gekennzeichnet, dass** die Phosphorsäuren ethylenisch ungesättigte Phosphonsäuren sind, die insbesondere ausgewählt werden aus der Gruppe bestehend aus Vinylphosphonsäure, Vinylphenylphosphonsäure oder deren Kombinationen.

12. Funktionalisierte Vliesstoffe nach Anspruch 9, **dadurch gekennzeichnet, dass** die Sulfonsäuren ethylenisch ungesättigte Sulfonsäuren sind, die insbesondere ausgewählt werden aus der Gruppe bestehend aus Vinylsulfonsäure, Vinylphenylsulfonsäure oder deren Kombinationen.

13. Funktionalisierte Vliesstoffe nach Anspruch 1, **dadurch gekennzeichnet, dass** diese kovalent auf der Faseroberfläche gebundene Vorläufer von Säuren enthalten.

14. Funktionalisierte Vliesstoffe nach Anspruch 13, **dadurch gekennzeichnet, dass** die Vorläufer von Säuren ethylenisch ungesättigte Vorläufer von Säuren sind, die insbesondere ausgewählt werden aus der Gruppe bestehend aus ethylenisch ungesättigten Sulfonen, ethylenisch ungesättigten Sulfoxiden oder deren Kombinationen.

15. Funktionalisierte Vliesstoffe nach Anspruch 14, **dadurch gekennzeichnet, dass** die ethylenisch ungesättigten Sulfone Vinylsulfon oder Divinylsulfon bedeuten und dass die ethylenisch ungesättigten Sulfoxide Vinylsulfoxid oder Divinylsulfoxid bedeuten.

16. Funktionalisierte Vliesstoffe nach Anspruch 1, **dadurch gekennzeichnet, dass** die an Faseroberfläche gebundenen Gruppen enthaltend Polyolgruppen sich ableiten von Ethylenglykol, Propylenglykol, Butylenglykol, Trimethylolpropan, Pentaerithrit oder Sorbit, oder von Polyethylenglykol, Polypropylenglykol oder Polybutylenglykol .

17. Funktionalisierte Vliesstoffe nach Anspruch 1, **dadurch gekennzeichnet, dass** die an Faseroberfläche gebundenen Gruppen enthaltend Polyethergruppen sich ableiten von Ethylenglykol-, Propylenglykol- oder Butylenglykolalkylether, Trimethylolpropanalkylether, Pentaerithritalkylether oder Sorbitalkylether oder von Polyethylenglykol-, Polypropylenglykol- oder Polybutylenglykolalkylethern.

18. Verfahren zur Herstellung der funktionalisierten Vliesstoffe nach Anspruch 1 umfassend die Schritte:
a) Herstellung eines Vliesstoffes durch eine Vlieststoffbildungstechnik in an sich bekannter Weise,
b) Bereitstellen eines Raumbereiches, in dem eine Plasmaentladung brennt und in dem mindestens eine einen organischen Rest enthaltende Säure und/oder deren Salz und/oder deren Vorläufer und/oder einen Polyether und/oder ein Polyol, vorzugsweise mindestens eine ethylenisch ungesättigte Säure und/oder deren Salz, Anhydrid und/oder Vorläufer, in feinverteilter Form vorliegt, und
c) Transport des Vliesstoffes durch den Raumbereich, in dem die Plasmaentladung brennt, so dass der Vliesstoff der Plasmaentladung ausgesetzt wird.

19. Verfahren zur Herstellung der funktionalisierten Vliesstoffe nach Anspruch 1 umfassend die Schritte:
a) Herstellung eines Vliesstoffes durch eine Vliesstoffbildungstechnik in an sich bekannter Weise,
b) Bereitstellen eines Raumbereiches, in dem eine Plasmaentladung brennt und in dem mindestens ein Vorläufer einer einen organischen Rest enthaltenden Säure gegebenenfalls in Kombination mit mindestens einer einen organischen Rest enthaltenden Säure, deren Salz und/oder deren Vorläufer und/oder einem Polyether und/oder einem Polyol in feinverteilter Form vorliegt,
c) Transport des Vliesstoffes durch den Raumbereich, in dem die Plasmaentladung brennt, so dass der Vliesstoff der Plasmaentladung ausgesetzt wird, und
d) Nachbehandlung des funktionalisierten Vliesstoffes mit einem Mittel, um aus dem Vorläufer der Säure die Säure oder deren Salz zu erzeugen.

20. Verfahren nach einem der Ansprüche 18 bis 19, **dadurch gekennzeichnet, dass** die Plasmaentladung bei Drucken zwischen 0,7 und 1,3 bar und in nicht-oxidierender Atmosphäre durchgeführt wird.

21. Verfahren nach einem der Ansprüche 18 bis 19, **dadurch gekennzeichnet, dass** dem Plasma Vernetzer mit mindestens zwei reaktiven Gruppen, vorzugsweise ethylenisch ungesättigten Gruppen, besonders bevorzugt mindestens zwei Vinylgruppen zugesetzt werden.

22. Verfahren nach einem der Ansprüche 18 bis 19, **dadurch gekennzeichnet, dass** der Vliesstoff vor Schritt b) durch Plasmabehandlung in Inertgasatmosphäre oder mit Luft aktiviert wird.

23. Verfahren nach einem der Ansprüche 18 bis 19, **dadurch gekennzeichnet, dass** Schritt b) mehrfach wiederholt wird.

24. Verwendung der funktionalisierten Vliesstoffe nach Anspruch 1 als Filter- oder Trennmaterialien.

25. Verwendung nach Anspruch 24, **dadurch gekennzeichnet, dass** die funktionalisierten Vliesstoffe in Filter- oder Trennverfahren in flüssigen Medien eingesetzt werden.

26. Verwendung nach Anspruch 25, **dadurch gekennzeichnet, dass** die funktionalisierten Vliesstoffe zur Filtration oder Trennung von ionisierten oder ionisierbaren Polymeren, insbesondere von Proteinen, eingesetzt werden.
